# EUROPEAN PATENT APPLICATION

(11) **EP 4 795 929 A1**
(43) Date of publication of application: **26.08.2026**
(21) Application number: 26159531.8
(22) Date of filing: 19.02.2026
(51) Int. Cl.: A01K 1/01

(54) **TURF TRAY**

(30) Priority: 24.02.2025 AU 2025900530
(71) Applicant: Camitech Enterprises Pty Ltd, Melbourne, VIC 3189 (AU)
(72) Inventor: Mitchell, Cameron, Melbourne, Victoria (AU)
(74) Representative: Kaya, Erdem

(57) **Abstract**

A turf tray in which turf can be laid comprises a base for supporting a growth medium upon which turf can be laid, and walling for enclosing at least a portion of a perimeter of the turf. The base comprises a drainage area via which liquid seeping through the turf and the underlying growth medium can be drained from the base, a floor which slopes towards the drainage area to direct liquid toward the drainage area for drainage, and ridges projecting upwardly from the floor for supporting a liner for receiving the growth medium, the ridges being configured to maintain the liner above the floor to enable airflow therebetween, thereby promoting drainage and aeration beneath the liner.

## Description

The disclosure of the complete specification of Australian provisional patent application no. 2025900530 as originally filed is incorporated herein by reference.

### Technical field

The subject matter of the present specification relates to a turf tray.

### Background

The present disclosure relates to a turf tray, and more particularly to a tray configured to facilitate the growth and/or maintenance of live turf in a controlled environment. The turf tray may be used for aesthetic or landscaping purposes or as an animal potty, such as for dogs.

Live turf is commonly desired in both indoor and outdoor settings for decorative, recreational, and functional purposes. However, maintaining natural turf outside traditional soil environments can be challenging. When grown in containers, grass often suffers from poor drainage, inadequate root aeration, and difficulty in moisture retention, which can lead to root rot, drying out, or uneven growth. Additionally, existing turf-growing solutions may not be modular or easily portable, limiting their use in residential and commercial applications.

For dog owners, particularly those living in apartments or homes without backyards, providing an appropriate designated potty area for their pets is essential. While synthetic grass mats and disposable pee pads are available, they often lack the natural feel and absorbency of real grass. Dogs generally prefer to urinate on natural turf due to its texture and scent. As a result, real turf potty systems have been introduced, allowing dogs to relieve themselves on live grass housed within a tray or container.

However, existing real turf potties suffer from several disadvantages. Due to repeated exposure to urine and moisture, the grass quickly degrades, leading to odour build-up, bacterial growth, and poor hygiene. As a result, pet owners must frequently replace the turf, incurring non-insignificant ongoing costs and inconvenience. Furthermore, many existing trays lack effective drainage, causing urine to pool and accelerate turf deterioration.

There is a need to address the above, and/or at least provide a useful alternative.

### SUMMARY

According to a first aspect of the present invention, there is provided a turf tray in which turf can be laid, the tray comprising a base for supporting a growth medium upon which turf can be laid, and walling for enclosing at least a portion of a perimeter of the turf, the base comprising: a drainage area via which liquid seeping through the turf and the underlying growth medium can be drained from the base; a floor which slopes towards the drainage area to direct liquid toward the drainage area for drainage; and ridges projecting upwardly from the floor for supporting a liner for receiving the growth medium, the ridges being configured to maintain the liner above the floor to enable airflow therebetween.

In certain embodiments, adjacent ridges define a respective channel therebetween along which liquid can flow toward the drainage area. In at least one embodiment, a height of each ridge, measured vertically from the floor of the base, increases with its proximity to the drainage area.

An upper end of each ridge may lie in a common plane upon which the liner can be supported. In other words, the top face or surface of each ridge can be thought of as existing or lying in a substantially flat and horizontal plane. This is achieved despite the floor sloping downwardly toward the drainage area the closer the floor is thereto. As such, areas of the floor that are higher relative to the drainage area would have a ridge height that is smaller than areas where the floor is lower relative to the drainage area. Put another way, when moving in the direction of the slope of the floor, the corresponding height of the associated ridges increases to compensate for the reducing floor height. This compensation of ridge is configured such that all the ridges reach up to a common height (e.g., as measured from a generally flat ground upon which the turf tray is positioned) so as to define a flat, horizontal plane on which a liner can be positioned.

In at least one example, each ridge comprises: a first end proximate to the walling of the tray; and a second end proximate to the drainage area, wherein each ridge is oriented towards the drainage area.

The drainage area may be substantially surrounded by the floor. In certain examples, the drainage area may comprise spaced apart openings extending through the base.

The turf tray may also comprise ground engaging means for, in use, supporting the base of the tray above the ground. The ground engaging means may comprise a portion of the tray that physically contacts the ground when in use. In certain embodiments, the ground engaging means may also include detachable feet or wheels securable to the tray.

The turf tray may also comprise a receptacle arranged to underlie the drainage area for collecting fluid drained therethrough. In at least one embodiment, the receptacle is removable relative to the tray to permit disposal of liquid in the receptacle. In use, the receptacle may be supported above the ground and slidably removable relative to the tray.

The presently disclosed turf tray may be formed by assembling two or more tray components together. In one such embodiment, each tray component comprises a respective drainage area. In such embodiments, each drainage area may have its own receptacle for collecting fluid.

According to a second aspect of the present invention, there is provided an animal potty system comprising: the turf tray according to a first aspect of the present invention; a liner laid on the base so as to be supported by the ridges thereof, the liner comprising one or more openings to permit fluid to seep therethrough; a growth medium spread across the liner; and turf laid on the growth medium.

According to a third aspect of the present invention, there is provided a method of forming an animal potty system, comprising: providing the turf tray according to a first aspect of the present invention; laying a liner on the base so that the liner is supported by the ridges thereof, the liner having one or more openings through which fluid can seep; spreading a growth medium across the liner; and laying turf on the growth medium. The method may optionally comprise forming one or more openings through the liner prior to laying the liner on the base so that fluid can seep through the openings in the liner and to the drainage area. The method may optionally also comprise cutting portions of the liner once laid on the base so that the liner is approximately the shape and size of the area of the base of the tray. Of course, the liner may be sized so that it substantially covers the base and also internal faces of the walling extending around the base.

### BRIEF DESCRIPTION OF THE DRAWINGS

The present subject matter will now be described, by way of example only, with reference to the accompanying drawings in which:
Fig. 1A is a top perspective view of a turf tray according to a first embodiment of the presently disclosed subject matter;
Fig. 1B is a bottom perspective view of the turf tray of Fig. 1A;
Fig. 2A is a top perspective view of two tray components which can be assembled together to form the turf tray of Fig. 1A;
Fig. 2B is a top perspective view of one of the tray components of Fig. 2A;
Fig. 3A is a rear perspective view of the tray component of Fig. 2B;
Fig. 3B is a top perspective view of a receptacle of the turf tray of Fig. 1A;
Fig. 4A is a bottom perspective view of the turf tray of Fig. 1A, wherein one tray component and its receptacle are omitted;
Fig. 4B is a top perspective view of the turf tray of Fig. 4A;
Fig. 5 is a top perspective view of a turf tray according to a second embodiment of the presently disclosed subject matter;
Fig. 6 is a close-up top perspective view of the base of the turf tray of Fig. 5; and
Fig. 7 is a bottom perspective view of the turf tray of Fig. 5 with a receptacle thereof partially slid out.

### DETAILED DESCRIPTION

The present specification discloses turf tray embodiments in which turf can be laid. The turf tray may provide a versatile and controlled environment for supporting natural turf in a variety of applications. For example, the tray may be used in both indoor and outdoor settings, allowing users to incorporate live grass into spaces where conventional turf maintenance may be impractical.

The turf tray may be particularly useful for pet owners, serving as a designated potty area for animals such as canines. This may be particularly beneficial for individuals living in apartments or homes without yards, as it still allows pets to relieve themselves on real grass.

Additionally, the tray may serve as a training aid for puppies by providing a natural-feeling surface that encourages appropriate toileting behaviour.

Beyond pet-related uses, turf tray embodiments may be employed for decorative, landscaping, or recreational purposes. For example, certain embodiments may function as a portable lawn section for balconies, patios, or rooftop gardens, allowing users to enjoy the aesthetic and sensory benefits of real grass without requiring a full lawn.

The turf tray may be formed from various materials, including plastics, metals, composite materials, and/or biodegradable substances, depending on its intended use. It may be constructed with different sizes and shapes, accommodating small, medium, or large turf sections, and may feature customisable designs to integrate into different environments.

To promote the health and longevity of the turf, the tray may incorporate drainage systems and/or removable water collection reservoirs to mitigate waterlogging and facilitate aeration and odour and hygiene management.

The presently disclosed turf tray comprises a base for supporting a growth medium, such as a potting mix, upon which turf can be laid. As will be discussed, the base may comprise formations such as ridges to help promote aeration and/or drainage so as to facilitate turf health.

In certain examples, such structural formations may include a grid-like base upon which the growth medium can be distributed. This grid-like structure may serve multiple functions. Firstly, it can help keep the soil evenly distributed by providing physical support, reducing the risk of soil shifting due to watering, pet use, or environmental factors. Secondly, it may aid in aeration and root penetration, as spaces within the grid may promote greater airflow. Improved aeration can mitigate compaction of the growth medium, a common issue that can inhibit root expansion and reduce turf resilience. As will be discussed, the formations of the base may also assist in moisture management, and may be configured to promote controlled drainage from the turf tray so that the turf is not oversaturated.

The turf tray also comprises walling configured to surround or enclose at least a portion of a perimeter of the turf laid in the tray. The walling may help contain the soil and turf within the tray, reducing spillage or displacement due to movement, watering, or external forces such as pets stepping onto the surface. This is particularly useful when the tray is used in indoor settings or portable applications, where maintaining a clean and low maintenance environment may be of utmost importance to the user.

The walling may be of varying heights and configurations, depending on the intended use. In some embodiments, the walling may be relatively low, serving primarily as a subtle boundary to prevent potting mix and water runoff while maintaining a seamless aesthetic. This may be preferred where the turf tray is intended primarily for aesthetic purposes. In other embodiments, the walls may be higher, particularly for pet potty applications, where the high walls can help contain waste within the tray. The walling may also be angled or sloped to facilitate drainage towards a designated area, reducing water pooling and enhancing the overall hygiene of the turf surface.

The base of the turf tray comprises a drainage area configured to facilitate the removal of fluids, such as water from irrigation or rain, as well as liquid waste in pet potty applications. Proper drainage is important to prevent waterlogging, which can lead to root rot, fungal growth, and an unhealthy turf surface. Ensuring adequate drainage also helps maintain a dry and sanitary environment, particularly when the tray is used as a pet potty, as stagnant liquid can produce unpleasant odours and encourage bacterial buildup.

The drainage area of the turf tray may be configured in various ways, depending on the intended use. In some embodiments, the drainage area of the base may include drainage holes or perforations to allow fluids to pass through and exit the base of the tray. These openings may be strategically positioned to ensure even drainage across the entire turf surface, preventing pooling in certain areas.

The base of the turf tray also comprises a floor which slopes towards the drainage area to direct liquid toward the drainage area. Such turf tray embodiments can help channel excess moisture out of the turf without requiring the user to manually tilt the tray.

The tray also comprises ridges projecting upwardly from the floor of the base. The ridges are configured for supporting a liner or membrane in the tray upon which the growth medium, such as potting mix, can be spread. It is envisaged that the ridges are spaced apart far enough apart from one another to enable the flow of air and fluid between adjacent ridges, but are still close enough together such that they can support the liner without having the liner sag into the space between adjacent ridges. In this way, the ridges help to maintain the liner above the floor of the base to enable the flow of air and fluid between adjacent ridges. In such embodiments, it is envisaged that the upper end of each ridge all lie in the same plane so as to essentially define a planar surface which supports the liner. In this way, even though the ridges are spaced apart from one another, their configuration enables the liner to be laid down so as to be maintained in a relatively flat and planar form on the ridges and without contacting the floor of the base.

As will be discussed, the turf tray may also be provided with one or more waste collection trays or receptacles positioned beneath the drainage area(s). Such receptacles may be particularly advantageous for pet potty applications, as it allows fluids such as water and urine to be collected and disposed of, thereby promoting easy cleaning and improved hygiene.

In certain embodiments, the turf tray comprises one or more receptacles configured to underlie at least the drainage area(s) to collect fluid drained therethrough. The receptacle serves as a fluid collection system, ensuring that excess water, pet waste, or other liquids are captured and contained, mitigating spills and maintaining a clean and sanitary environment. Preferably, the or each receptacle is removable from beneath the base of the turf tray, allowing for easy disposal of collected fluids without the need to tilt or move the entire tray.

The size, shape, and capacity of the receptacle(s) may vary depending on the intended application of the turf tray. For smaller indoor or balcony applications, a compact, shallow receptacle may be used to facilitate frequent disposal. Of course, larger turf trays may be provided with one or more larger receptacles which may be deeper and capable of holding larger volumes of liquid before requiring emptying. It is envisaged that the or each receptacle may include measurement indicators to help users monitor fluid levels and determine when disposal is necessary. In certain embodiments, at least a rear and exposed side of the receptacles may be at least partially transparent so that users can visually determine, without removing the receptacle from the turf tray, the amount of liquid in the receptacle and thus whether emptying of the receptacle is necessary.

The receptacle may be configured with a handle, pull-out tray mechanism, or sliding rails, allowing it to be easily removed, emptied, and reinserted without disturbing the turf or soil. The material of the receptacle may be chosen based on durability and ease of cleaning. For example, plastic, stainless steel, or treated metal may be used to ensure the receptacle is resistant to corrosion, staining, and bacterial buildup. Some embodiments may incorporate anti-microbial coatings or odour-control additives to further enhance hygiene, particularly when the tray is used as a pet potty.

In certain embodiments, the turf tray may be formed by assembling two or more tray components together, allowing for greater flexibility in manufacturing, transportation, and storage. This modular design enables users to disassemble and reassemble the tray as needed, which can facilitate cleaning, replacement of components, and even resizing of the turf tray as needed. For example, the turf tray may be formed from two halves that can be removably connected together. These halves may be designed to interlock via complementary edges, such as snap-fit connections, dovetail joints, or fastening mechanisms like screws or clips. The connection mechanism is such that the assembled turf tray is structurally stable during use while still being easy to separate when required. By allowing for disassembly, the presently disclosed turf tray may be more compact for storage and shipping, which can be beneficial for both manufacturers and end users.

In some embodiments, the two halves may be substantially identical and/or symmetrical, enabling simplified manufacturing by reducing the number of unique components required. In certain variations, additional modular sections may be incorporated, allowing users to extend or modify the tray size and/or shape to accommodate different applications, such as expanding the turf area for multiple pets or adjusting the dimensions for a specific indoor or outdoor space.

The connection mechanism between the tray components may include sealing features, such as rubber gaskets or watertight grooves, to inhibit fluid leakage at the areas where the tray components meet. This is particularly useful when the turf tray is used as a pet potty, where preventing leaks is important for hygiene and cleanliness purposes. In certain embodiments, the two tray components may be hinged together, enabling the turf tray to be folded open for easy cleaning and soil replacement without requiring full disassembly.

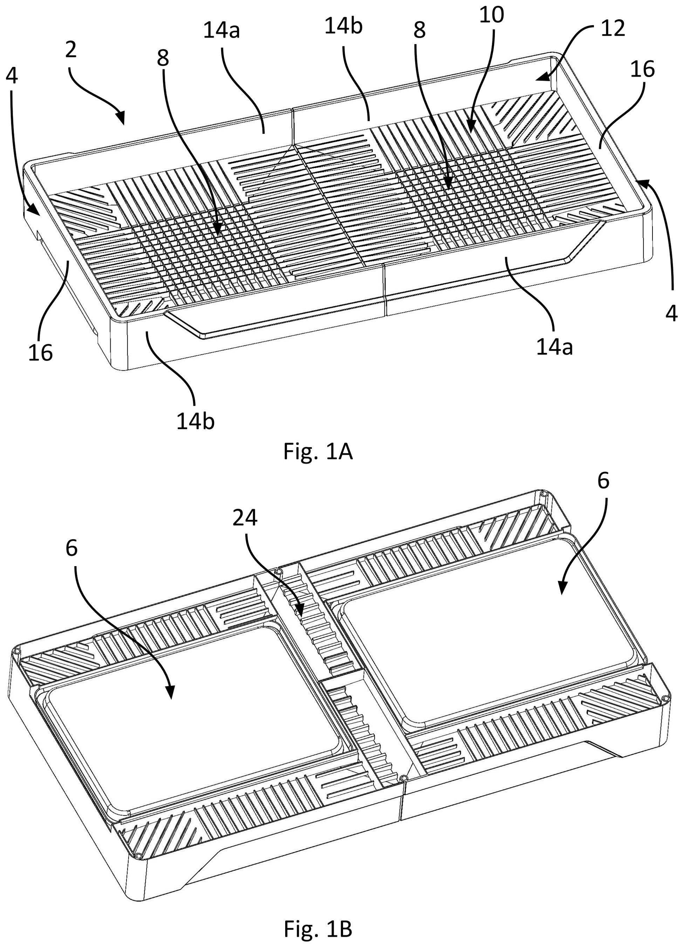

Figs. 1A to 4B show an example turf tray 2 formed from two tray components 4, each tray component 4 substantially defining one half of the turf tray 2 (with the exception of the two receptacles 6 underlying each tray component 4). This particular embodiment is described with reference to the Figs. 1A to 4B, though it will be understood that the presently disclosed turf tray 2 need not be formed from two or more tray components 4 that need to be assembled together. For example, the turf tray may have a base and walling that is substantially integrally formed. Where one or more receptacles 6 are provided, it may be that only the receptacle(s) 6 constitute components that may be 'disassembled' from the turf tray 2.

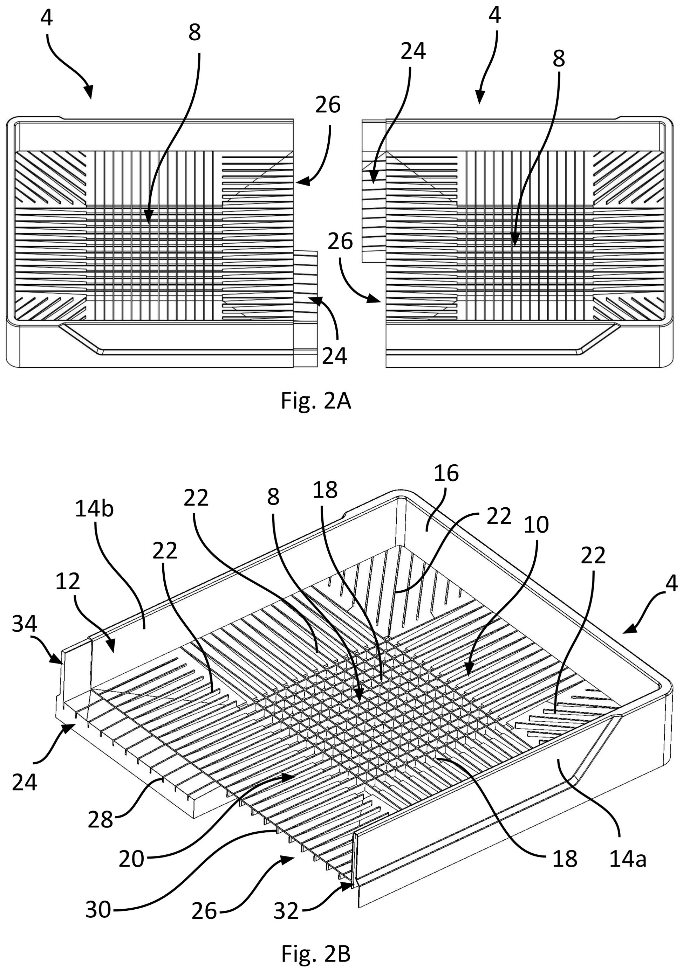

Figs. 1A and 1B show top and bottom perspective views of a turf tray 2 assembled from two tray components 4. A tray-like receptacle 6 underlies each tray component 4 and is configured to collect fluid that drains therethrough. Fig. 2A shows the tray two components 4 separated from one another; the underlying receptacles 6 are omitted to better show the central drainage area 8 of each tray component 4. As can be seen, two like or identical tray components 4 can be assembled together to form the turf tray 2 of Fig. 1A.

Fig. 2B shows the depicted tray component 4 in greater detail. The tray component 4 defines a base 10 for supporting a liner-type membrane upon which a growth medium can be distributed, and walling 12 for enclosing at least a portion of the perimeter of the turf that would be placed on the growth medium. The walling 12 of the tray component 4 comprises a pair of spaced apart lateral walls 14 interconnected at one end by an end wall 16. An opposite end of the tray component 4 is free from such walling and, as will be discussed, is configured to connect to an opposite and generally identical tray component 4 so as to form the turf tray 2.

The base 10 of the tray component 4 comprises a generally square shaped and central drainage area 8 formed from an arrangement of equispaced and equisized openings 18 extending through the base 10. In the depicted embodiment, the drainage area 8 comprises a grid-like formation of square shaped openings 18 sized to permit the drainage of liquid.

The base 10 of the tray component 4 also comprises a draining means in the form of a floor 20 that is adjacent and slopes downwardly toward the drainage area 8 such that liquid seeping through the turf and the underlying growth medium is directed to flow toward and be drained via the drainage area 8. The floor 20 of the turf tray component 4 simply refers to the region(s) of the base 10 that are closed and thus do not permit drainage therethrough. With reference to the tray component 4 of Fig. 2B, the floor 20 is depicted as the non-porous surfaces which are adjacent to and surround and slope downwardly toward the drainage area 8. In this way, the drainage area 8 defines a lowermost region of the base 10 of the tray component 4. Correspondingly, the regions of the floor 20 that are closest to the outer boundary of the base 10 define the highest regions thereof. In this way, fluid that seeps through the turf is thus encouraged to flow, under the influence of gravity, down the sloped floor 20 and towards the central drainage area 8 so as to be drained from the tray component 4. In certain embodiments, it is envisaged that the surface area of the central drainage area 8 may be, for example, upwards of 30% of the total surface area of the base of the turf tray component 4.

Still referring to Fig. 2B, it can be seen that the floor 20 of the base 10 comprises spaced apart and elongate ridges 22 which project upwardly from the floor 20 of the base 10. The ridges 22 on one side of the central drainage area 8 are generally parallel to one another and oriented 'toward' the central drainage area 8 such that a fluid channel is effectively defined between adjacent ridges 22. These ridges 22, combined with the downwardly sloping surface from which they project 20, help to channel fluid downwardly toward the drainage area 8.

As previously foreshadowed, a forward end of the tray component 4 is configured for interconnection with the forward end of a like tray component 4 so that the two components 4 can be assembled to form the turf tray 2. In the embodiment depicted in Fig. 2B, the forward end of the tray component 4 comprises a male connection portion 24 and a female connection portion 26, the male connection portion 24 comprising a transversely extending ramp-like projection 24 configured to be received by the correspondingly shaped female connection portion 26 of the opposing tray component 4. In the depicted embodiment, the male ramp-like structure 24 is configured with a series of spaced apart slots 28 which are configured to receive respective connection ridges 30 which extend downwardly from the base 10 of the tray component 4 at the female connection portion 26 thereof. Additionally, the lateral wall 14a closest to the female connection portion 26 is formed with a connection hollow or recess 32 while the opposite lateral wall 14b proximate the male connection portion 26 is formed with a correspondingly shaped projection 34 configured to slot into the aforementioned female recess 32. In this way, two like tray components 4 can be assembled together via their respective forward ends (e.g., by bringing the two tray components 4 of Fig. 2A together) to form the generally continuous turf tray 2 shown in Fig. 1A. As can be seen, the lateral walls 14a, 14b of each tray component 4 are interconnected to respective lateral walls 14b, 14a of the other tray component 4, thereby forming generally continuous walling 12 which extends around a perimeter of the turf tray 2 which substantially encloses around the soil and turf placed on the turf tray 2. Additionally, the interconnection of the male and female portions 24, 26 of the opposing tray components 4 is configured so that the two tray components 4, together, define a continuous base 10 wherein fluid cannot inadvertently leak through the areas where the two tray components 4 meet. Of course, elastomeric sealing means and the like may be provided to further mitigate fluid leaks at the interface between the two tray components 4.

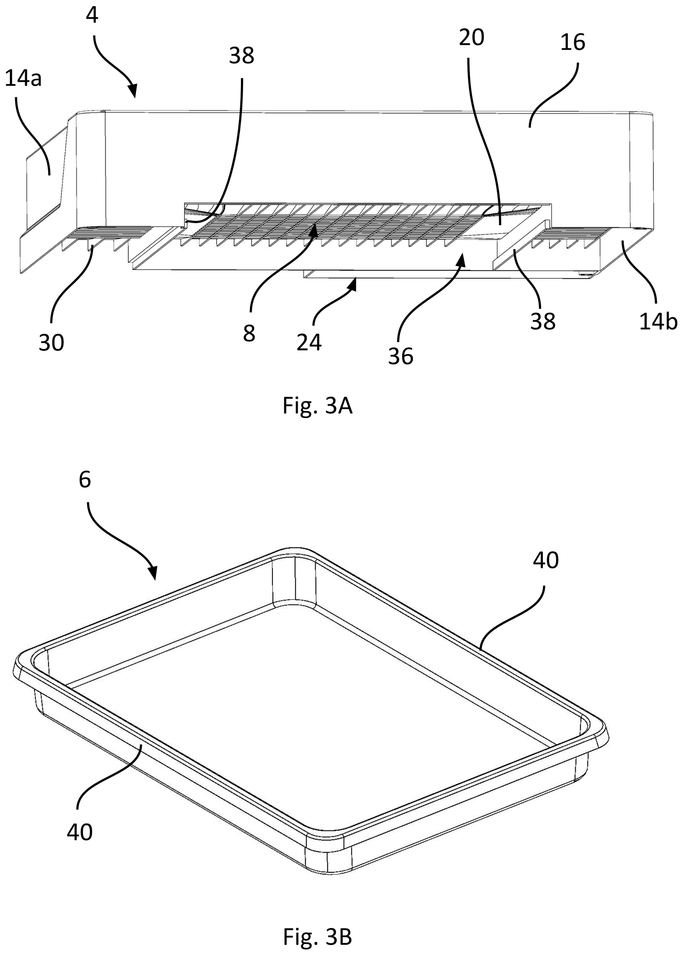

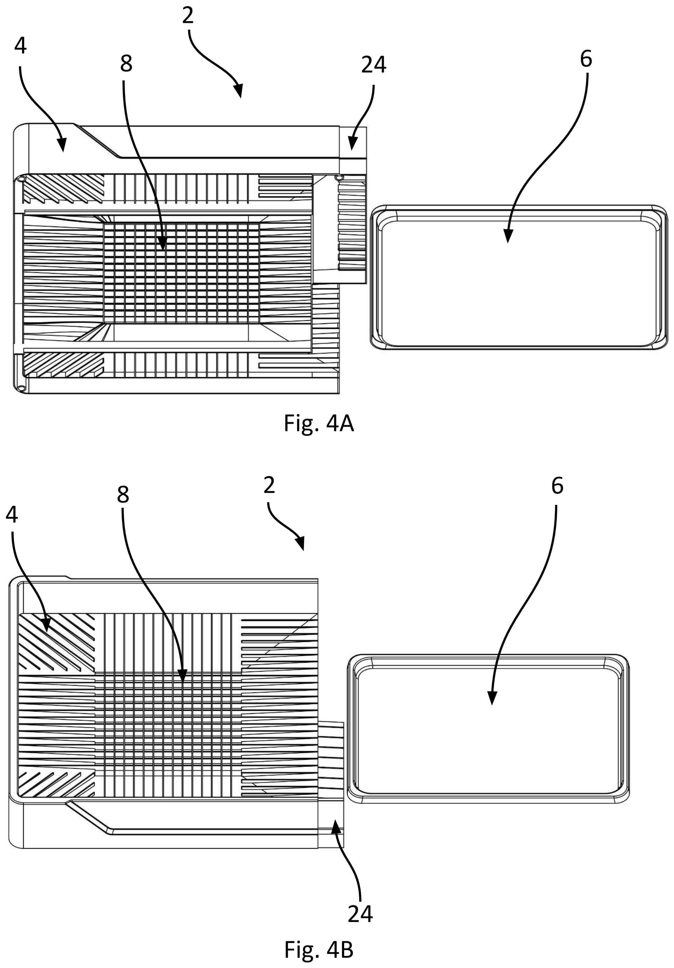

Fig. 3A shows a rear end of the tray component 4 of Fig. 2B, wherein the receptacle 6 has been removed. A lower end beneath the base 10 of the tray component 4 is formed with a recess or cavity 36 (also shown in Fig. 4A) in which a receptacle 6 can be removable stored. Fig. 3B shows an example of a tray-like receptacle 6 which can be removably slid in and out of the recess 36 beneath the base of the tray component 4. In the depicted embodiment, the tray component 4 comprises a pair of opposed and substantially smooth elongate projections 38 configured to receive respective overhanging flanges 40 of the receptacle 6. In this way, the receptacle 6 can simply be supported beneath the base 10 of the tray component 4 via the elongate projections 38. Referring also to Figs. 4A and 4B, in use, each receptacle 6 underlies at least the drainage area 8 of the respective tray component 4 so that drained fluid collects in the receptacles 6. A user can simply slide the receptacles 6 rearwardly and out from the respective tray components 4 in order to dispose of fluid that has collected in the receptacles 6.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

Finally, it is to be understood that various alterations, modifications and/or additions may be made without departing from the spirit of the present invention as disclosed herein. For example, the receptacle(s) may not be fully removable from the tray. For example, in one embodiment, the or each receptacle may simply slide or otherwise move outwardly from beneath the drainage area to a certain extent. The or each receptacle might have a respective plug or stopper which can then be manually operated so that collected fluid can be drained out through the receptacle.

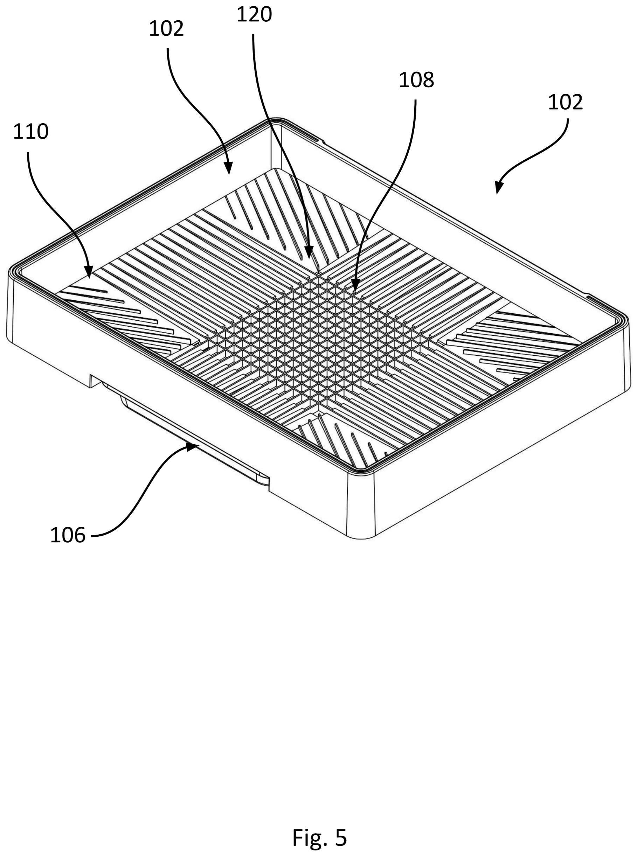

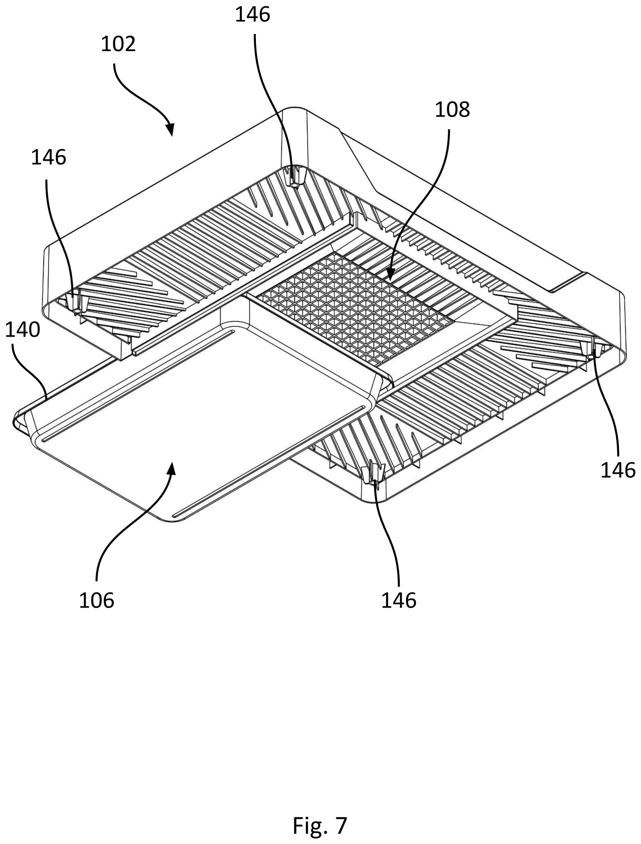

It will also be appreciated that the turf tray need not be formed from two or more tray components, as per the embodiment shown in Figs. 5 to 7, wherein like features are designated by like reference numerals incremented by 100. In this embodiment, the turf tray 102 comprises a base 110 having a floor 120 and upstanding walling 112 extending around a perimeter thereof. The base 110 and walling 112 together define a turf-receiving cavity of sufficient depth to accommodate a multi-layer assembly comprising a liner laid on the base 110, a growth medium (such as potting mix) distributed across the liner, and a slab of turf.

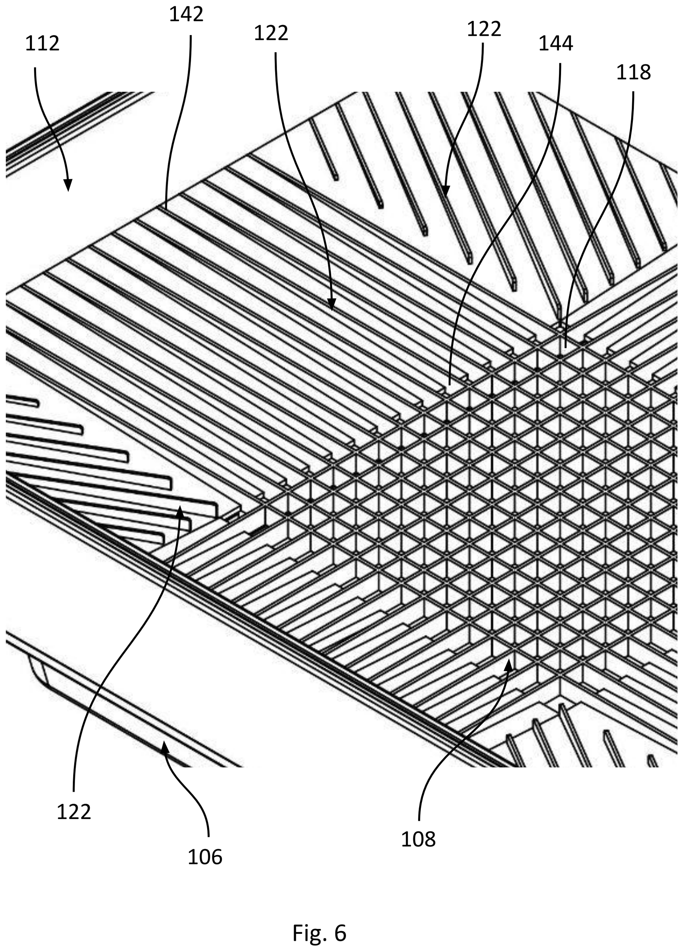

With reference to Figs. 5 and 6, the floor 120 comprises a plurality of ridges 122 projecting upwardly therefrom. The ridges 122 are configured to support the liner in a plane that is substantially parallel to the ground upon which the tray is positioned. Each ridge 122 extends from a first end 142 proximate the walling 112 to a second end 144 proximate to the centrally located drainage area 108. In the illustrated embodiment, each ridge 122 is oriented toward the drainage area 108, thereby defining a network of channels interspersed between the ridges 122.

The floor 120 is formed with a downward slope directed toward the drainage area 108. To ensure the turf remains substantially level for use by an animal, the height of each ridge 122, measured vertically from the floor 120, increases as the ridge 122 approaches the drainage area 108. This varying ridge height compensates for the slope of the floor 120, such that the upper ends of each ridge 122 lie in a common plane and thus collectively define a generally horizontal support surface for the liner.

This architecture creates a ventilated plenum or airflow gap between the supported liner and the sloped floor 120. In use, fluid seeping through the turf and growth medium, flows downwardly along the sloped floor 120 and enters the drainage area 108. While the ridges 122 are spaced apart from one another, they are configured to be close enough together to prevent the liner - even when heavily weighted by the growth medium - from sagging into or sealing against the floor 120 of the base 110, thereby ensuring that the channels defined between adjacent ridges 122 remain unobstructed for both fluid flow and aerobic ventilation. The drainage area 108 is in fluid communication with a receptacle 106 positioned in a subfloor compartment beneath the base 110.

The turf tray 102 may further comprise ground engaging means 170, such as castor wheels and the like, which can support the tray 102 such that, in use, the tray and optionally the receptacle 106 are both elevated above the ground. In this way, the receptacle 106 can be slidably removable relative to the base 110, allowing a user to dispose of collected waste liquid without disturbing the overlying turf assembly. In Fig. 6, each corner at an underside of the base 110 is provisioned with respective mounting means 146 via which a respective wheel can be secured.

In a preferred method of assembly, the liner is perforated with one or more openings and laid across the ridges 122 which extend upwardly from the floor 120 of the base 110. A layer of growth medium, such as a high-porosity potting mix, is spread across the liner and then a living turf slab may be laid. The combination of the sloped floor 120 and the ventilated plenum maintained by the ridges 122 facilitates the removal of excess moisture while preventing anaerobic root conditions within the growth medium.

## Claims

1. A turf tray in which turf can be laid, the tray comprising a base for supporting a growth medium upon which turf can be laid, and walling for enclosing at least a portion of a perimeter of the turf, the base comprising:
a drainage area via which liquid seeping through the turf and the underlying growth medium can be drained from the base;
a floor which slopes towards the drainage area to direct liquid toward the drainage area for drainage; and
ridges projecting upwardly from the floor for supporting a liner for receiving the growth medium, the ridges being configured to maintain the liner above the floor to enable airflow therebetween.

2. The turf tray of claim 1, wherein adjacent ridges define a respective channel therebetween along which liquid can flow toward the drainage area.

3. The turf tray of claim 1 or 2, wherein a height of each ridge, measured vertically from the floor of the base, increases with its proximity to the drainage area.

4. The turf tray of any one of the preceding claims, wherein an upper end of each ridge lies in a common plane upon which the liner can be supported.

5. The turf tray of any one of the preceding claims, wherein each ridge comprises:
a first end proximate to the walling of the tray; and
a second end proximate to the drainage area,
wherein each ridge is generally oriented towards the drainage area.

6. The turf tray of any one of the preceding claims, wherein the drainage area is substantially surrounded by the floor.

7. The turf tray of any one of the preceding claims, wherein the drainage area comprises spaced apart openings extending through the base.

8. The turf tray of any one of the preceding claims, further comprising ground engaging means for, in use, supporting the base of the tray above the ground.

9. The turf tray of any one of the preceding claims, further comprising a receptacle underlying the drainage area for collecting fluid drained therethrough.

10. The turf tray of claim 9, wherein the receptacle is removable relative to the tray to permit disposal of liquid in the receptacle.

11. The turf tray of claim 9 or 10, wherein in use, the receptacle is supported above the ground so as to be slidably removable relative to the tray.

12. The turf tray of any one of the preceding claims, being formed by assembling two or more tray components together.

13. The turf tray of claim 12, wherein each tray component comprises a respective drainage area.

14. An animal potty system comprising:
the turf tray of any one of the preceding claims;
a liner laid on the base so as to be supported by the ridges thereof, the liner comprising one or more openings to permit fluid to seep therethrough;
a growth medium spread across the liner; and
turf laid on the growth medium.

15. A method of forming an animal potty system, comprising:
providing the turf tray of any one of claims 1 to 13;
laying a liner on the base so that the liner is supported by the ridges thereof, the liner having one or more openings through which fluid can seep;
spreading a growth medium across the liner; and
laying turf on the growth medium.
